# EUROPEAN PATENT APPLICATION

(11) **EP 3 660 250 A1**
(43) Date of publication of application: **03.06.2020**
(21) Application number: 18209642.0
(22) Date of filing: 30.11.2018
(51) Int. Cl.: E05F 3/10

(54) **ADJUSTING DEVICE AND DOOR CLOSER ASSEMBLY**

(71) Applicant: dormakaba Deutschland GmbH, 58256 Ennepetal (DE)
(72) Inventor: Chin, Teck Liang Francis, 58256 Ennepetal (DE); Soh, Yong Jin, 58256 Ennepetal (DE); Kan, Wenig kit, 58256 Ennepetal (DE)
(74) Representative: Balder IP Law, S.L.

(57) **Abstract**

The invention is related to an adjusting device for a door closer. This adjusting device comprises a worm screw (1) intended to be engaged with the door closer, a drive wheel (3) solidly attached to the worm screw (1), a connection element and an indicator wheel (6). The connection element comprises a first wheel (4) meshed with the drive wheel (3) and a second wheel (5) which is solidly attached with the first wheel (4). The indicator wheel (6) is meshed with the second wheel (5). The invention also provides a door closer including such an adjusting device.

## Description

### TECHNICAL FIELD

This invention is related to the field of door closing systems, and more particularly, to the devices which are in charge of adjusting the power size of those systems.

### STATE OF THE ART

Automated door closing systems are used to make a door close automatically when it has been opened. These systems are usually based on a spring which stores energy when the door is being opened and exerts a return force to close the door. The initial position of the spring may be tuned to choose the opposition force that the spring offers and the closing force that is exerted afterwards, although this force may be modulated by a corresponding dumper.

To tune the initial position of the spring, a spring plate is usually employed. This spring plate may be moved by a worm and gear mechanism, so that when the gear is operated from the outside, a worm which is engaged with the gear rotates and displaces the spring plate linearly, to obtain the most suitable spring force for each application.

The size of these worm and gear mechanisms makes that, when a particular spring force is to be set for a particular type of door, the operator must give tenths of turns to the gear to put the spring plate in its the correct position. The operator must therefore count the number of turns and it is not difficult that they lose count of how many turns are given to the gear.

Document US 4,590,639 A discloses a door closer with a force indicator. A pin is solidly attached to the spring plate so that when this spring plate displaces, the pin also displaces and runs along scaling marks which provide a quantification of the movement of the spring plate.

Document DE 10 2011 077 990 B4 discloses a door closer with a force indicator. A gear is operated by an adjusting device, the adjusting device comprising a worm engaged to the gear and a wheel with one or more teeth. When the adjusting device is operated, the worm moves the gear, causing the displacement of the spring plate, and at the same time, the wheel, which is moved solidly with the worm, moves a scale which provides a quantification of the movement of the spring plate.

### SUMMARY OF THE INVENTION

The invention provides an alternative solution for providing a force indicator by an adjusting device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an adjusting device for a door closer.

This adjusting device comprises
a worm screw intended to be engaged with the door closer;
a drive wheel solidly attached to the worm screw;
a connection element which comprises a first wheel meshed with the drive wheel and a second wheel which is solidly attached with the first wheel; and
an indicator wheel which is meshed with the second wheel.

With such an adjusting device, the movement of the worm screw is easily quantified in the indicator wheel, since the first wheel and the second wheel may provide a gear reduction which makes the control of the number of turns easier. Further, the location of the drive wheel may be independent from the location of the indicator wheel, thus providing a more flexible design of the rest of the elements of the door closer.

In particular embodiments, the worm screw and the drive wheel form a single piece which further comprises a head which is configured to be screwed by a tool, in such a way that when the head is turned, the drive wheel turns in the same way.

A head which may be operated, e. g., by an Allen key, provides an easy access an operation in order to modify the pre-stressing value of the spring plate.

In particular embodiments, the first wheel is a slotted wheel or Geneva wheel comprising slots and transition zones, and wherein the drive wheel comprises a pin configured to be inserted in the slots of the first wheel and a protrusion which has an edge with a circular portion configured to match with the transition zones of the first wheel.

A Geneva wheel provides an accurate way of counting the turns which are given to the worm screw, which are transmitted to the spring plate of the door closer. This Geneva wheel makes one step when a small portion of a turn is given, and remains standstill while the rest of the turn is completed. As a consequence, a continuous movement may be discretely quantified in the indicator wheel.

In particular embodiments, the first wheel comprises between 4 and 10 slots.

Such a value is common so that the Geneva wheel is not very complex but achieves its aim of remaining standstill while the majority of the turn is being given. Indeed, in the event of no tolerances, the first wheel only turns 180º - 360º/n, wherein n is the number of slots. For example, in a wheel with 6 slots, the first wheel would turn a maximum of 120 degrees (in the event of no tolerances) while it would remain standstill for another 240 degrees until the next turn.

In particular embodiments, the second wheel and the indicator wheel comprise teeth, the teeth of the second wheel being adapted to be meshed with the teeth of the indicator wheel.

This provides an easy engagement, and an easy way of obtaining a predetermined gear ratio which allows the design step to choose the dimensions of these two elements of the adjusting device.

In particular embodiments, the number of teeth of the second wheel is comprised between 1 and 2.5 times the number of slots of the first wheel. This size is usually advantageous for most of the applications in door closing.

In particular embodiments, the indicator wheel comprises a plurality of marks, such as numbers, intended to inform about the angular position of the indicator wheel.

The numbers may represent tenths of revolutions; the indicator wheel may be designed with a number of teeth of the common range of turns to be given. If a closing element is to be adjusted from 20 to 60 turns, an indicator wheel with 50 teeth would cover this range with no major issue.

In some particular embodiments, the first wheel has a first diameter and the second wheel has a second diameter which is at least twice the first diameter.

This difference between the first and second diameters is usually enough to achieve an advantageous gear reduction ratio in the connection between the second wheel and the indicator wheel.

In a second inventive aspect, the invention provides a door closer assembly for being used with an adjusting device as defined above, wherein the door closer assembly comprises
a spring biased by a spring plate
a gear wheel solidly attached with the spring plate, the gear wheel comprising a first element configured to match a second element solidly attached to the spring plate in such a way that when the gear wheel turns, the first element causes a linear displacement in the second element, dragging the spring plate in a forward or backward movement
an adjusting device according to the first inventive aspect, wherein the worm screw of the adjusting device is meshed with the gear wheel of the door closer.

This closer assembly achieves the adjustment of the position of the spring plate by means of turning the drive wheel of the associated adjusting device. The number of turns which are given to the drive wheel is shown in the indicator wheel, so that they are accurately registered.

In particular embodiments, the first element is a threaded inner surface and the second element is a threaded shaft configured to match the inner surface, in such a way that when the gear wheel turns, the threaded shaft is displaced linearly.

The way the movement is transmitted from the gear wheel to the spring plate admits several different advantageous solutions. One of the simplest one is placing an inner threaded section in the gear wheel, so that the circular movement of the gear wheel is converted in a linear movement of the shaft which is associated to the spring plate.

In some particular embodiments, the door closer assembly further comprises a closing mechanism connected to a door, the closing mechanism being arranged to compress the spring when the door is being opened and then receive a back force to close the door when the door is released.

This closing device may be used to achieve a controlled closing of a door, wherein the position of the spring plate defines the amount of force necessary to open the door and the recovery force that closes said door when it is released.

### BRIEF LIST OF DRAWINGS AND REFERENCE NUMBERS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general perspective view of a door closer assembly according to the invention.
Figures 2a and 2b show a complete view and a partially disassembled view of some elements of the adjusting device according to the invention.
Figures 3a and 3b show operation views of some elements of the adjusting device according to the invention.
Figure 4 shows a top view of a door closer assembly according to the invention.

Elements of the example embodiments are consistently denoted by the same reference numerals throughout the drawings and detailed description where appropriate:
- 1: Worm screw
- 2: Head of the adjusting element
- 21: Hexagonal housing of the head
- 3: Drive wheel
- 31: Driving pin
- 32: Protrusion
- 33: Circular arc of the protrusion
- 34: Concave portion of the protrusion
- 4: First wheel
- 41: Slots of the first wheel
- 42: Transition zones of the first wheel
- 5: Second wheel
- 6: Indicator wheel
- 7: Door shaft

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

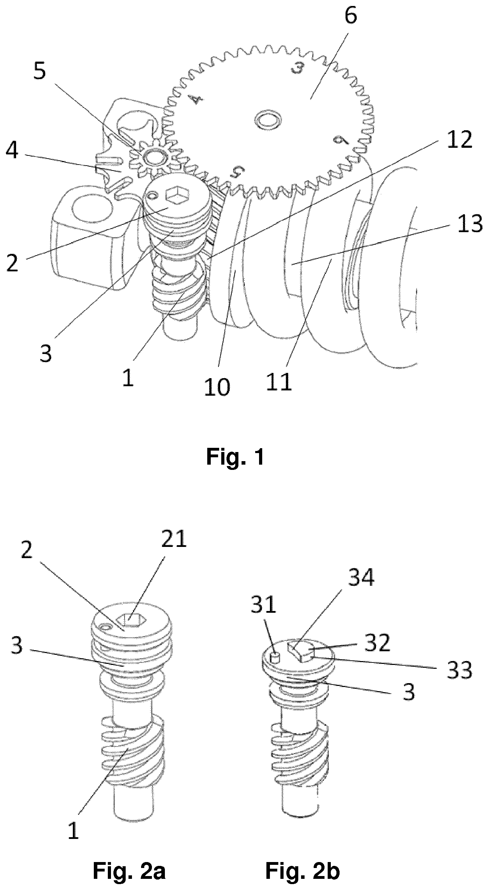

Figure 1 shows a general perspective view of a door closer assembly according to the invention.

The door closer assembly uses a spring 11 to manage the controlled closing of a door (not shown). The reference position of the spring 11 is biased by a spring plate 10, which may be linearly displaced in order to achieve a more compressed or a more relaxed reference position of the spring 11.

The position of this spring plate 10 is controlled by a gear wheel 12, which is solidly attached to a shaft 13 which is associated to the spring plate 10. When the gear wheel 12 turns, it causes the shaft 13 to be linearly displaced, and the spring plate 10 is also dragged in this movement. With this simple mechanism, the spring plate 10 may be displaced forwards or backwards depending on the recovery force requirements for each door.

The rotating movement of the gear wheel 12 is controlled by a worm screw 1 which belongs to an adjusting device according to the invention. The gear wheel 12 is meshed with the worm screw 1 of the adjusting device, so that when the worm screw 1 is turned, the gear wheel 12 also rotates.

This adjusting device comprises a head 2, which may be easily operated by an Allen key to spin the assembly containing the worm screw 1 and the drive wheel 3, which will be described below in more detail.

This drive wheel 3 is meshed to a first wheel 4 of a connection element. This first wheel 4 is a Geneva wheel with slots, so that a turn in the drive wheel 3 is converted in a step between slots in the first wheel 4. This first wheel 4 is solidly connected to a second wheel 5, so that the angular movement of the first wheel 4 is the same as the angular movement of the second wheel 5. This second wheel 5 is in turn meshed with an indicator wheel 6, so that the movement of the second wheel 5 is transmitted to the indicator wheel 6, which may provide an accurate register of the turns given to the worm gear 1 of the adjusting device.

Figures 2a and 2b show a complete view and a partially disassembled view of some elements of the adjusting device according to the invention.

Figure 2a shows the worm screw 1 and the drive wheel 3 which is partially hidden by the head 2. The worm screw 1, the head 2 and the drive wheel 3 form a single piece. The head 2, as mentioned before, has a hexagonal housing 21, to be operated by an Allen key. When the head 2 is turned, the drive wheel 3 turns in the same way.

Figure 2b shows the elements of figure 2a but without the head, so that the drive wheel 3 is completely shown. This drive wheel 3 comprises a driving pin 31 and a protrusion 32. The protrusion 32 comprises an edge with a circular arc 33 and a concave portion 34.

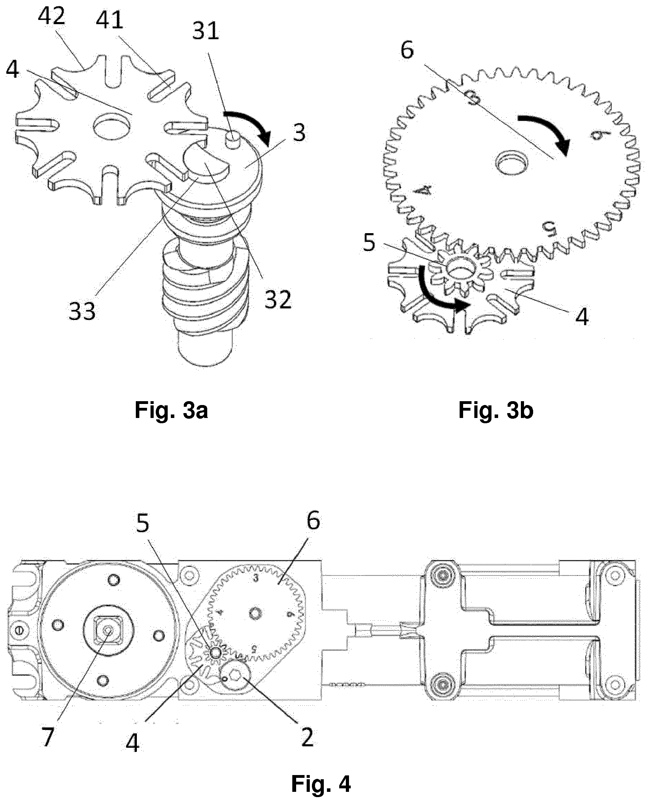

Figures 3a and 3b show operation views of some elements of the adjusting device according to the invention.

As shown in figure 3a, the driving pin 31 is configured to be inserted in the slots 41 of the first wheel 4 and move one step in this first wheel 4. On the contrary, the circular arc 33 of the protrusion 32 acts as a blocking element for the first wheel 4, matching the transition zones 42 of the first wheel 4 while the drive wheel 3 is performing the rest of the turn, thus keeping the first wheel 4 in a standstill position during this period.

Figure 3b shows the interaction between the second wheel 5, which is solidly attached to the first wheel 4, and the indicator wheel 6. The turns which are given to the head of the adjusting element were transferred via the drive wheel to the first wheel 4. Now, the second wheel 5, which turns with the first wheel 4, transmits the movement to the indicator wheel 6. As a consequence, the indicator wheel reflects the number of turns which have been given to the head and, as a consequence, to the worm screw.

In this embodiment, the first wheel 4 comprises 8 slots, and the second wheel 5 comprises 10 teeth. As a consequence, when the drive wheel spins 8 times, the indicator wheel advances 10 teeth. This ratio may be easily chosen by changing the number of teeth of the second wheel 5 and/or the indicator wheel 6.

Figure 4 shows a top view of a door closer assembly according to the invention. The head 2 is subject to the operation of an Allen key. The turns given to the head are internally transmitted to the spring plate (not seen) which biases the spring, so that the resistive back force offered in the door shaft 7 is conveniently chosen. The number of turns given in the head 2 is in turn transmitted, via the first wheel 4 and the second wheel 5, to the indicator wheel 6, which has a number scale to show the operator the stress level of the spring plate.

## Claims

1. Adjusting device for a door closer, the adjusting device comprising
a worm screw (1) intended to be engaged with the door closer;
a drive wheel (3) solidly attached to the worm screw (1);
a connection element which comprises a first wheel (4) meshed with the drive wheel (3) and a second wheel (5) which is solidly attached with the first wheel (4); and
an indicator wheel (6) which is meshed with the second wheel (5).

2. Adjusting device according to claim 1, wherein the worm screw (1) and the drive wheel (3) form a single piece which further comprises a head (2) which is configured to be screwed by a tool, in such a way that when the head (2) is turned, the drive wheel (3) turns in the same way.

3. Adjusting device according to any of the preceding claims, wherein the first wheel (4) is a slotted wheel or Geneva wheel comprising slots (41) and transition zones (42), and wherein the drive wheel (3) comprises a pin (31) configured to be inserted in the slots (41) of the first wheel (4) and a protrusion (32) which has an edge with a circular portion (33) configured to match with the transition zones (42) of the first wheel (4).

4. Adjusting device according to claim 3, wherein the first wheel (4) comprises between 4 and 10 slots (41).

5. Adjusting device according to any of the preceding claims, wherein the second wheel (5) and the indicator wheel (6) comprise teeth, the teeth of the second wheel being adapted to be meshed with the teeth of the indicator wheel (6).

6. Adjusting device according to the claim 5 when depends on any of claims 3 or 4, wherein the number of teeth of the second wheel (5) is comprised between 1 and 2.5 times the number of slots of the first wheel (4).

7. Adjusting device according to any of the preceding claims, wherein the indicator wheel (6) comprises a plurality of marks, such as numbers, intended to inform about the angular position of the indicator wheel (6).

8. Adjusting device according to any of the preceding claims, wherein the first wheel (4) has a first diameter and the second wheel (5) has a second diameter which is at least twice the first diameter.

9. Door closer assembly comprising
a spring (11) biased by a spring plate (10);
a gear wheel (12) solidly attached to the spring plate (10), the gear wheel (12) comprising a first element configured to match a second element solidly attached to the spring plate (10) in such a way that when the gear wheel turns, the first element causes a linear displacement in the second element, dragging the spring plate (10) in a forward or backward movement; and
an adjusting device according to any of the preceding claims, wherein the worm screw (1) of the adjusting device is meshed with the gear wheel (12) of the door closer.

10. Door closer assembly according to claim 9, wherein the first element is a threaded inner surface and the second element is a threaded shaft (13) configured to match the inner surface, in such a way that when the gear wheel (12) turns, the threaded shaft (13) is displaced linearly.

11. Door closer assembly according to any of claims 9 or 10, further comprising a closing mechanism (7) connected to a door, the closing mechanism being arranged to compress the spring (11) when the door is being opened and then receive a back force to close the door when the door is released.
